# EUROPEAN PATENT APPLICATION

(11) **EP 2 922 336 A1**
(43) Date of publication of application: **23.09.2015**
(21) Application number: 12890644.3
(22) Date of filing: 31.12.2012
(51) Int. Cl.: H04W 28/02

(54) **METHOD, APPARATUS, AND SYSTEM FOR RADIO BEARER CONTROL**

(71) Applicant: Huawei Technologies Co., Ltd., Longgang District Shenzhen, Guangdong 518129 (CN)
(72) Inventor: LIU, Lin, Shenzhen Guangdong 518129 (CN); WANG, Chengyi, Shenzhen Guangdong 518129 (CN); YAO, Yao, Shenzhen Guangdong 518129 (CN); YU, Yang, Shenzhen Guangdong 518129 (CN)
(74) Representative: Thun, Clemens
(86) International application number: PCT/CN2012/088030
(87) International publication number: WO 2014/101175

(57) **Abstract**

Embodiments of the present invention disclose a radio bearer control method, device, and system. The radio bearer control method includes: if it is determined that a radio network providing a service for a user equipment is congested and it is determined that the user equipment meets a condition of stopping data receiving and sending, sending a first message, where the first message includes information for indicating at least one radio bearer stop, so as to enable the user equipment to stop uplink data sending and downlink data receiving, thereby reducing resource consumption of the radio network. The embodiments of the present invention further disclose a radio bearer control device and system.

## Description

### TECHNICAL FIELD

Embodiments of the present invention relate to the field of communications, and particularly, to a radio bearer control method, device, and system.

### BACKGROUND

Currently, an important site in a radio network bear services of a large number of users, and severe resource congestion occurs easily. To solve a problem of resource congestion at a site in a radio network, in one aspect, efficiency of uplink and downlink resources of the site needs to be optimized. On another aspect, to make a radio network system stable and reduce a system load, resource requests of users further need to be controlled, and resource requests of a part of users are rejected. For a packet service user, especially, after admission rejection, because a resource cannot be obtained, a large quantity of repeated attempts are made, which causes that uplink received total wideband power (Received Total Wideband Power, RTWP) is abnormal and cannot be controlled at a target value.

### SUMMARY

In view of this, embodiments of the present invention provide a radio bearer control method, device, and system, so as to implement that when a radio network is congested, a user equipment can obtain a resource, and at the same time, consumption of communication resources of the radio network can also be reduced, thereby avoiding retaliatory retries of the user equipment.

In a first aspect, a radio bearer control method is provided and includes:
determining, according to use information of at least one kind of resource, whether a radio network providing a service for a user equipment is congested; determining, according to at least one kind of call control information of the user equipment, whether the user equipment meets a condition of stopping data receiving and sending; and if it is determined that the radio network providing a service for the user equipment is congested and it is determined that the user equipment meets the condition of stopping data receiving and sending, sending a first message, where the first message includes information for instructing the user equipment to stop at least one radio bearer.

In a first possible implementation manner of the first aspect, the first message includes: radio bearer reconfiguration RADIO BEARER RECONFIGURATION; or, cell update confirm CELL UPDATE CONFIRM; or, radio bearer release RADIO BEARER RELEASE; or, radio bearer setup RADIO BEARER SETUP.

In a second possible implementation manner of the first aspect, the information for instructing the user equipment to stop at least one radio bearer may indicate that a radio bearer stop/continue attribute of the at least one radio bearer is stop.

In a third possible implementation manner of the first aspect, the resource includes: a power resource; or, a channel processing unit CE resource; or, a code resource; or, an Iub interface transmission bandwidth resource; or, a signaling processing unit SPU resource; or, a forward access channel FACH resource; or, a paging channel PCH resource; or, a non-high speed packet access service R99 resource; or, a high speed packet access service HSPA resource; or, a circuit service CS resource; or, a packet service PS resource.

The use information of the resource includes: a usage rate of the resource; or, a used quantity of the resource; or, an available quantity of the resource; or, an admission rejection probability of the resource; or, a congestion probability of the resource; or, a congestion level of the resource; or, a congestion state of the resource.

In a fourth possible implementation manner of the first aspect, the determining, according to use information of at least one kind of resource, whether a radio network is congested includes: performing weighted averaging according to the use information of the at least one kind of resource and a weight of the resource to obtain comprehensive resource use information; and determining, according to the comprehensive resource use information and a congestion threshold, whether the radio network providing a service for the user equipment is congested.

In a fifth possible implementation manner of the first aspect, the call control information of the user equipment includes:
a connection state of the user equipment, where the connection state includes a cell dedicated channel CELL_DCH state, or, a cell forward access channel CELL_FACH state, or, a cell paging channel CELL_PCH state, or, a UTRAN registration area paging channel URA_PCH state; or,
a service connection phase of the user equipment, where the service connection phase includes an RRC setup phase, or, an RRC phase, or, a RAB setup phase, or, a RAB phase; or,
a handover state of the user equipment, where the handover state includes a soft handover state, or, a non-soft handover state; or,
an allocation retention priority ARP of the user equipment; or,
a traffic handling priority THP of the user equipment; or,
a user importance level of the user equipment, where the user importance level may be a gold user, or, a silver user, or a bronze user; or,
a traffic class TC of the user equipment, where the traffic class is a streaming service, or, an interaction service, or, a background service, or, a session service; or,
data throughput of the user equipment; or,
at least one kind of link quality indicator, where the link quality indicator includes a common pilot channel CPICH ratio of energy per chip to the total noise power density Ec/N0, or, common pilot channel CPICH received signal code power RSCP, or, pathloss Pathloss, or, a block error rate BLER, or, a signal to interference ratio SIR.

In a sixth possible implementation manner of the first aspect, the determining, according to at least one kind of call control information of the user equipment, whether the user equipment meets a condition of stopping data receiving and sending includes: performing weighted averaging according to the at least one kind of call control information of the user equipment and a weight of the call control information of the user equipment to obtain comprehensive matching information; and determining, according to the comprehensive call control information, that the user equipment meets the condition of stopping data receiving and sending.

With reference to the sixth possible implementation manner of the first aspect, in a seventh possible implementation manner of the first aspect, the determining, according to the comprehensive call control information, whether the user equipment meets the condition of stopping data receiving and sending includes determining, according to a comparison result between the comprehensive call control information and a preset threshold, whether the user equipment meets the condition of stopping data receiving and sending.

With reference to the sixth possible implementation manner of the first aspect, in an eighth possible implementation manner of the first aspect, the determining, according to the comprehensive call control information, whether the user equipment meets the condition of stopping data receiving and sending includes sequencing the comprehensive call control information of the user equipment and comprehensive call control information of at least one other user equipment; and determining, according to sequencing information of the comprehensive call control information of the user equipment, whether the user equipment meets the condition of stopping data receiving and sending.

In a ninth possible implementation manner of the first aspect, the method further includes: determining whether the at least one radio bearer of the user equipment has been stopped; if it is determined that the radio network providing a service for the user equipment is not congested and it is determined that the at least one radio bearer of the user equipment has been stopped, sending the first message, where the first message includes information for instructing the user equipment to restore the at least one radio bearer.

In a tenth possible implementation manner of the first aspect, the information for instructing the user equipment to restore the at least one radio bearer may indicate that the radio bearer stop/continue attribute of the at least one radio bearer is continue.

In an eleventh possible implementation manner of the first aspect, the radio bearer is a traffic radio bearer TRB or a signaling radio bearer SRB.

In a second aspect, a radio bearer control method is provided and includes:
receiving, by a user equipment, a first message, where the first message is sent by a radio access network device when it is determined that a radio network providing a service for the user equipment is congested and it is determined that the user equipment meets a condition of stopping data receiving and sending, and includes information for instructing the user equipment to stop at least one radio bearer; and
stopping, by the user equipment, the user equipment the at least one radio bearer according to the information which is for instructing the user equipment to stop at least one radio bearer and is in the first message.

In a first possible implementation manner of the second aspect, the method further includes: receiving, by the user equipment, a first message, where the first message is sent by the radio access network device when it is determined that the radio network providing a service for the user equipment is not congested and it is determined that the at least one radio bearer of the user equipment has been stopped, and includes information for instructing the user equipment to restore the at least one radio bearer; and
restoring, by the user equipment, the at least one radio bearer according to the information which is for instructing the user equipment to restore the at least one radio bearer and is in the first message.

In a third aspect, a radio access network device is provided and includes:
a first determining unit, configured to determine, according to use information of at least one kind of resource, whether a radio network providing a service for a user equipment is congested;
a second determining unit, configured to determine, according to at least one kind of call control information of the user equipment, whether the user equipment meets a condition of stopping data receiving and sending; and
a sending unit, configured to send a first message when the first determining unit determines that the radio network providing a service for the user equipment is congested and the second determining unit determines that the user equipment meets the condition of stopping data receiving and sending, where the first message includes information for instructing the user equipment to stop at least one radio bearer.

In a first possible implementation manner of the third aspect, the first message includes:
radio bearer reconfiguration RADIO BEARER RECONFIGURATION; or, cell update confirm CELL UPDATE CONFIRM; or, radio bearer release RADIO BEARER RELEASE; or, radio bearer setup RADIO BEARER SETUP.

In a second possible implementation manner of the third aspect, the information for instructing the user equipment to stop at least one radio bearer may indicate that a radio bearer stop/continue attribute of the at least one radio bearer is stop.

In a third possible implementation manner of the third aspect, the resource includes: a power resource; or, a channel processing unit CE resource; or, a code resource; or, an Iub interface transmission bandwidth resource; or, a signaling processing unit SPU resource; or, a forward access channel FACH resource; or, a paging channel PCH resource; or, a non-high speed packet access service R99 resource; or, a high speed packet access service HSPA resource; or, a circuit service CS resource; or, a packet service PS resource.

The use information of the resource includes: a usage rate of the resource; or, a used quantity of the resource; or, an available quantity of the resource; or, an admission rejection probability of the resource; or, a congestion probability of the resource; or, a congestion level of the resource; or, a congestion state of the resource.

In a fourth possible implementation manner of the third aspect, the first determining unit includes:
a resource weighting module, configured to perform weighted averaging according to the use information of the at least one kind of resource and a weight of the resource to obtain comprehensive resource use information; and
a congestion determining module, configured to determine, according to the comprehensive resource use information obtained by the resource weighting module and a congestion threshold, whether the radio network providing a service for the user equipment is congested.

In a fifth possible implementation manner of the third aspect, the call control information of the user equipment includes:
a connection state of the user equipment, where the connection state includes a cell dedicated channel CELL_DCH state, or, a cell forward access channel CELL_FACH state, or, a cell paging channel state CELL_PCH, or, a UTRAN registration area paging channel state URA_PCH state; or,
a service connection phase of the user equipment, where the service connection phase includes an RRC setup phase, or, an RRC phase, or, a RAB setup phase, or, a RAB phase; or,
a handover state of the user equipment, where the handover state includes a soft handover state, or, a non-soft handover state; or,
an allocation retention priority ARP of the user equipment; or,
a traffic handling priority THP of the user equipment; or,
a user importance level of the user equipment, where the user importance level may be a gold user, or, a silver user, or a bronze user; or,
a traffic class TC of the user equipment, where the traffic class is a streaming service, or, an interaction service, or, a background service, or, a session service; or,
data throughput of the user equipment; or,
at least one kind of link quality indicator, where the link quality indicator includes a common pilot channel CPICH ratio of energy per chip to the total noise power density Ec/N0, or, common pilot channel CPICH received signal code power RSCP, or, pathloss Pathloss, or, a block error rate BLER, or, a signal to interference ratio SIR.

In a sixth possible implementation manner of the third aspect, the second determining unit includes:
a control weighting module, configured to perform weighted averaging according to the at least one kind of call control information of the user equipment and a weight of the control rule to obtain comprehensive matching information; and
a control determining module, configured to determine, according to the comprehensive call control information obtained by the control weighting module, whether the user equipment meets the condition of stopping data receiving and sending.

In a seventh possible implementation manner of the third aspect, the control determining module is specifically configured to:
determine, according to a comparison result between the comprehensive call control information and a preset threshold, whether the user equipment meets the condition of stopping data receiving and sending.

In an eighth possible implementation manner of the third aspect, the control determining module is specifically configured to:
sequence the comprehensive call control information of the user equipment and comprehensive call control information of at least one other user equipment; and
determine, according to sequencing information of the comprehensive call control information of the user equipment, whether the user equipment meets the condition of stopping data receiving and sending.

In a ninth possible implementation manner of the third aspect, the radio access network device further includes:
a third determining unit, configured to determine whether the at least one radio bearer of the user equipment has been stopped; where
the sending unit is further configured to send the first message when the first determining unit determines that the radio network providing a service for the user equipment is not congested and the third determining unit determines that the at least one radio bearer of the user equipment has been stopped, where the first message includes information for instructing the user equipment to restore the at least one radio bearer.

In a tenth possible implementation manner of the third aspect, the information for instructing the user equipment to restore the at least one radio bearer may indicate that the radio bearer stop/continue attribute of the at least one radio bearer is continue.

In an eleventh possible implementation manner of the third aspect, the radio bearer is a traffic radio bearer TRB or a signaling radio bearer SRB.

In a fourth aspect, a user equipment is provided and includes:
a receiving unit, configured to receive a first message, where the first message is sent by a radio access network device when it is determined that a radio network providing a service for the user equipment is congested and it is determined that the user equipment meets a condition of stopping data receiving and sending, and includes information for instructing the user equipment to stop at least one radio bearer; and
a control unit, configured to stop the at least one radio bearer according to the information which is for instructing the user equipment to stop at least one radio bearer and is in the first message received by the receiving unit.

In a first possible implementation manner of the fourth aspect, the first message received by the receiving unit is sent by the radio access network device when it is determined that the radio network providing a service for the user equipment is not congested and it is determined that the at least one radio bearer of the user equipment has been stopped, and includes information for instructing the user equipment to restore the at least one radio bearer; and
the control unit is further configured to configured to restore the at least one radio bearer according to the information which is for instructing the user equipment to restore the at least one radio bearer and is in the first message received by the receiving unit.

In a fifth aspect, a computer program product is provided, where the computer program product stores one or more groups of computer programs, and when being run, the computer programs are used to execute the method of any one of the first aspect.

In the method, device, and system in the embodiments of the present invention, when a radio network is congested, a user equipment is made to stop uplink data sending and downlink data receiving, so as to reduce resource consumption of the radio network; when a resource of the radio network is not congested, a radio bearer that has been stopped is restored as soon as possible, so as to enable the user to restore sending and receiving of service data as soon as possible.

### BRIEF DESCRIPTION OF DRAWINGS

FIG. 1 is a flow chart of a radio bearer control method according to an embodiment of the present invention;
FIG. 2 is a flow chart of a radio bearer control method according to another embodiment of the present invention;
FIG. 3 is a structural diagram of a radio access network device according to another embodiment of the present invention;
FIG. 4 is a structural diagram of a user equipment according to another embodiment of the present invention;
FIG. 5 is a structural diagram of a radio access network device according to another embodiment of the present invention; and
FIG. 6 is a structural diagram of a user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. It can be understood that, the embodiments to be described are merely a part rather than all of the embodiments of the present invention. All other embodiments obtained by a person of ordinary skill in the art based on the embodiments of the present invention without creative efforts shall fall within the protection scope of the present invention.

A method and an apparatus in the embodiments of the present invention may be implemented by a radio access network device. A radio access network device is implemented by, but is not limited to, any one or more than one of the following, such as a base station NodeB or a radio network controller RNC or other control nodes of an access network device. In the embodiments of the present invention, for a radio access network device, a user and a user equipment have the same meaning.

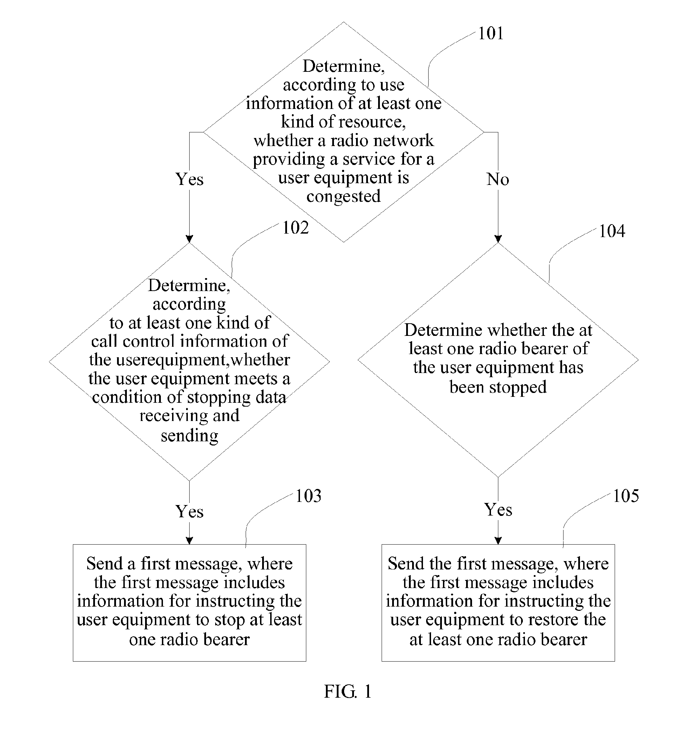

FIG. 1 is a flow chart of a radio bearer control method according to an embodiment of the present invention. As shown in FIG. 1, the method may include:
101: Determine, according to use information of at least one kind of resource, whether a radio network providing a service for a user equipment is congested.

The resource may be a power resource, or, a channel processing unit (Channel Element, CE) resource, or, a code resource, or, an Iub transmission bandwidth resource, or, a signaling processing unit (Signalling Process Unit, SPU) resource, or, a forward access channel (Forward Access Channel, FACH) resource, or, a paging channel (Paging Channl, PCH) resource, or, a non-high speed packet access service R99 resource, or, a high speed packet access service (High Speed Packet Access, HSPA) resource, or, a circuit service (Circuit Service, CS) resource, or, a packet service (Packet Service, PS) resource, or the like, and the embodiment of the present invention is not limited thereto.

It should be noted that the use information of the resource may be a usage rate of the resource, or, a used quantity of the resource, or, an available quantity of the resource, or, an admission rejection probability of the resource, or, a congestion probability of the resource, or the like, and may also be a congestion level of the resource, or, a congestion state of the resource, or the like. The foregoing only provides examples for description, and the embodiment of the present invention is not limited thereto.

The determining whether a radio network providing a service for a user equipment is congested may be determining according to the use information of the at least one kind of resource. For example, when a usage rate of a code resource exceeds a preset usage rate threshold, it is determined that the radio network providing a service for the user equipment is congested. For another example, when a user equipment requests to be allocated a packet service resource, if an available quantity of a non-high speed packet access service R99 resource is lower than a preset R99 available quantity threshold and an available quantity of a high speed packet access service HSPA resource is lower than a preset HSPA available quantity threshold, it is determined that the radio network providing a service for the user equipment is congested.

In another embodiment of the present invention, the determining, according to use information of at least one kind of resource, whether a radio network is congested may also be performing weighted averaging according to use information of each resource and a weight of the resource to obtain comprehensive resource use information, and determining, according to the comprehensive resource use information and a preset congestion threshold, whether the radio network providing a service for the user equipment is congested. For example, the use information of the resource used for determining whether the radio network providing a service for the user equipment is congested is a congestion level of a power resource, a congestion level of a CE resource, and a congestion level of an SPU resource.

Comprehensive resource use information = congestion level of a power resource x weight of the power resource + congestion level of a CE resource x weight of the CE resource + congestion level of an SPU resource x weight of the SPU resource.

By taking an example that a resource is congested more severely as a value of a congestion level of the resource is larger, if comprehensive resource use information is higher than or equal to a congestion threshold, it is determined that the radio network providing a service for the user equipment is congested.

For another example, by taking an example that an available quantity of a resource is used as the use information of the resource, the resource is congested more severely as the available quantity of the resource is lower, comprehensive resource use information is obtained according to the available quantity of the resource and a weight of the resource, and if the comprehensive resource use information is lower than a congestion threshold, it is determined that the radio network providing a service for the user equipment is congested.

It should be understood that congestion in a radio network may be determined in multiple manners, which are not listed one by one here, and the embodiment of the present invention is not limited thereto.
102: Determine, according to at least one kind of call control information of the user equipment, whether the user equipment meets a condition of stopping data receiving and sending.

The call control information of the user equipment may be a connection state of the user equipment, where the connection state may be a cell dedicated channel CELL_DCH state, or, a cell forward access channel CELL_FACH state, or, a cell paging channel state CELL_PCH state, or, a UTRAN registration area paging channel state URA_PCH state, or the like; or,
a service connection phase of the user equipment, where the service connection phase may be an RRC setup phase, or, an RRC phase, or, a RAB setup phase, or, a RAB phase, or the like; or,
a handover state of the user equipment, where the handover state is a soft handover state, or, a non-soft handover state, or the like; or,
an allocation retention priority (Allocation and Retention Priority, ARP) of the user equipment; or,
a traffic handling priority (Traffic Handle Priority, THP) of the user equipment; or,
a user importance level of the user equipment, where the user importance level may be a gold user, or, a silver user, or a bronze user; or,
a traffic class (Traffic Class, TC) of the user equipment, where the traffic class is a streaming service, or, an interaction service, or, a background service, or, a session service; or,
data throughput of the user equipment; or,
at least one kind of link quality indicator, where the link quality indicator may be a common pilot channel (Common Pilot Channel, CPICH) ratio of energy per chip to the total noise power density (Ratio of energy per chip to the total Noise power density, Ec/N0) or, common pilot channel CPICH received signal code power (Received Signal Code Power, RSCP) or, pathloss Pathloss, or, a block error rate (Block Error Rate, BLER) or, a signal to interference ratio (Signal to Interference Ratio, SIR), or the like.

For example, when the connection state of the user equipment is a CELL_FACH state, it is determined that the user equipment meets the condition of stopping data receiving and sending.

For another example, when the service connection phase of the user equipment is a RAB phase and the user importance level of the user equipment is a bronze user, it is determined that the user equipment meets the condition of stopping data receiving and sending.

For another example, when the traffic class of the user equipment is a background service or an interaction service, it is determined that the user equipment meets the condition of stopping data receiving and sending.

For another example, when the CPICH RSCP of the user equipment is higher than a preset RSCP threshold and the data throughput of the user equipment is smaller than a preset throughput threshold, or the CPICH Ec/N0 of the user equipment is higher than a preset Ec/N0 threshold and the data throughput of the user equipment is smaller than a preset throughput threshold, it is determined that the user equipment meets the condition of stopping data receiving and sending.

In another embodiment of the present invention, the determining, according to at least one kind of call control information of the user equipment, whether the user equipment meets a condition of stopping data receiving and sending may also be performing weighted averaging according to the at least one kind of call control information of the user equipment and a weight of the call control information to obtain comprehensive call control information; and determining, according to the comprehensive call control information, that the user equipment meets the condition of stopping data receiving and sending.

The determining, according to the comprehensive call control information of the user equipment, that the user equipment meets the condition of stopping data receiving and sending may be comparing the comprehensive call control information and a preset threshold to determine that the user equipment meets the condition of stopping data receiving and sending. For example, for the user equipment, the ARP is 11, and the THP is 6:
comprehensive call control information = ARP x weight of the ARP + THP x weight of the THP

It is assumed that the weight of the ARP is 0.4 and the weight of the THP is 0.6, so that the comprehensive call control information is 8. If the comprehensive call control information is higher than the preset threshold, it may be determined that the user equipment meets the condition of stopping data receiving and sending. It should be noted that, the foregoing is only an example for description, and the embodiment of the present invention is not limited thereto.

In another embodiment of the present invention, the determining, according to the comprehensive call control information of the user equipment, that the user equipment meets the condition of stopping data receiving and sending may also be sequencing the comprehensive call control information of the user equipment and comprehensive call control information of at least one other user equipment, and determining, according to a sequence of the comprehensive call control information of the user equipment, that the user equipment meets the condition of stopping data receiving and sending. For example, the comprehensive call control information of the user equipment is 8 and is sequenced together with comprehensive call control information of other 10 user equipments in a cell, if the sequence of the comprehensive call control information of the user equipment is among the top 3, it is determined that the user equipment meets the condition of stopping data receiving and sending. It should be noted that, the foregoing is only an example for description, and the embodiment of the present invention is not limited thereto.
103: If it is determined in step 101 that the radio network providing a service for the user equipment is congested and it is determined in step 102 that the user equipment meets the condition of stopping data receiving and sending, send a first message, where the first message includes information for instructing the user equipment to stop at least one radio bearer.

The first message includes, but is not limited to, the following messages: radio bearer reconfiguration (RADIO BEARER RECONFIGURATION), cell update confirm (CELL UPDATE CONFIRM), radio bearer release (RADIO BEARER RELEASE), radio bearer setup (RADIO BEARER SETUP), and the like. The first message includes a plurality of parameters of a radio bearer for controlling the radio bearer, such as a radio bearer identifier, logic channel information mapped by the radio bearer, radio bearer stop/continue (RB Stop/Continue), and the like, so that the radio access network device can configure a parameter of each radio bearer of the user equipment according to a requirement, thereby achieving an objective of controlling a radio bearer.

It should be understood that the first message may also be other messages on a user plane or control plane, and includes, but is not limited to, a radio bearer control information element newly added in an existing message or a newly added message including radio bearer control information, and the embodiment of the present invention is not limited thereto.

A radio bearer usually includes a signaling radio bearer (Signalling Radio Bearer, SRB) and a traffic radio bearer (Traffic Radio Bearer, TRB), where the SRB is used for transferring radio resource control signaling between the user equipment and the radio access network device, and the TRB is used for transferring service data between the user equipment and the radio access network device.

The radio access network device may send the first message to the user equipment in multiple scenarios. For example, when the user equipment initiates service setup, after completing resource admission for the user equipment, the radio access network device allocates a radio resource and a TRB to the user equipment, and determines to send a RADIO BEARER SETUP message to the user equipment. For another example, during a handover of the user equipment, after completing resource admission for the user equipment at a target cell of the handover, the radio access network device allocates a radio resource to the user equipment, updates a logic channel mapping of an SRB or a TRB, and determines to send a RADIO BEARER RECONFIGURATION message to the user equipment. For another example, when the user equipment triggers cell update, after completing resource admission for the user equipment at a target cell, the radio access network device allocates a radio resource to the user equipment, updates a logic channel mapping of an SRB or a TRB, and determines to send a CELL UPDATE CONFIRM message to the user equipment. For another example, when the user equipment releases a service, the radio access network device releases a radio resource of the user equipment relevant to the service, including a TRB corresponding to the service, updates a logic channel mapping of a remaining SRB or TRB, and determines to send a RADIO BEARER RELEASE message to the user equipment. It should be noted that multiple scenarios in which the first message needs to be sent to the user equipment are further included. The scenarios mentioned in the foregoing are only examples for description, and this embodiment is not limited thereto.

The first message may include information for instructing the user equipment to stop at least one radio bearer, and may, for example, indicate that a radio bearer stop/continue attribute of the at least one radio bearer is stop, so as to stop the radio bearer. The first message may also include other attributes to indicate at least one radio bearer stop, and the embodiment of the present invention is not limited thereto.

Through the embodiment of the present invention, a user equipment can obtain a radio resource, and can also keep that no uplink data sending and no downlink data receiving are performed, thereby reducing consumption in the radio network.

Preferably, to enable a user equipment to stop sending service data, and at the same time, to receive signaling sent by a radio access network device and send signaling to the radio access network device, a TRB of the user equipment is stopped first.

Through the method of the embodiment of the present invention, when a radio network is congested, a radio bearer of a user equipment is stopped to prevent the user equipment from uplink data sending and downlink data receiving, so that, in one aspect, the user equipment can acquire a radio resource, and particularly a resource request is not directly rejected, thereby avoiding retaliatory retries of the user equipment, and in another aspect, consumption of communication resources of a radio network is also reduced.

Further, another embodiment of the present invention may further include the following optional steps:
104: Determine whether the at least one radio bearer of the user equipment has been stopped.
105: If it is determined in step 101 that the radio network providing a service for the user equipment is not congested and it is determined in step 104 that the at least one radio bearer of the user equipment has been stopped, send the first message, where the first message includes information for instructing the user equipment to restore the at least one radio bearer.

The first message may include the information for instructing the user equipment to restore the at least one radio bearer, and may, for example, indicate that a radio bearer stop/continue attribute of the at least one radio bearer is continue, so as to restore the radio bearer, and the first message may also include other attribute to indicate at least one radio bearer continue, and the embodiment of the present invention is not limited thereto.

Through the method in the embodiment of the present invention, it is implemented that when a radio network is not congested, a radio bearer which has been stopped and is of a user equipment is restored as soon as possible, so as to enable a user to restore sending and receiving of service data as soon as possible.

It should be noted that steps 101, 102, and 104 are not subject to a sequence and may be executed in different sequences in different embodiments.

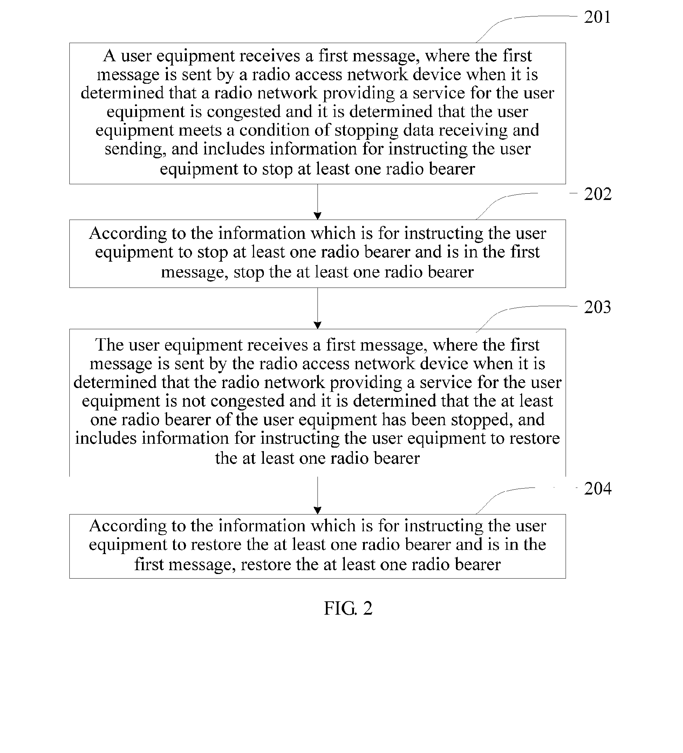

FIG. 2 is a flow chart of a radio bearer control method according to another embodiment of the present invention. As shown in the figure, the method may include:
201: A user equipment receives a first message, where the first message is sent by a radio access network device when it is determined that a radio network providing a service for the user equipment is congested and it is determined that the user equipment meets a condition of stopping data receiving and sending according to the method in the embodiment of FIG. 1, and includes information for instructing the user equipment to stop at least one radio bearer.
202: According to the information which is for instructing the user equipment to stop at least one radio bearer and is in the first message received in step 201, the user equipment stops the at least one radio bearer.

The first message is described in the foregoing method embodiment and is not repeatedly described here. Furthermore, the following optional steps may also be included:
203: The user equipment receives a first message, where the first message is sent by the radio access network device when it is determined that the radio network providing a service for the user equipment is not congested and it is determined that the at least one radio bearer of the user equipment has been stopped according to the method in the embodiment of FIG. 1, and includes information for instructing the user equipment to restore the at least one radio bearer.
204: According to the information which is for instructing the user equipment to restore the at least one radio bearer and is in the first message received in step 203, the user equipment stops the at least one radio bearer.

Through the method in the embodiment of the present invention, it is implemented that when a radio network is congested, a user equipment stops uplink data sending and downlink data receiving, so as to reduce resource consumption in the radio network. When a resource in the radio network is not congested, a radio bearer that has been stopped is restored as soon as possible, so as to enable a user to restore sending and receiving of service data as soon as possible.

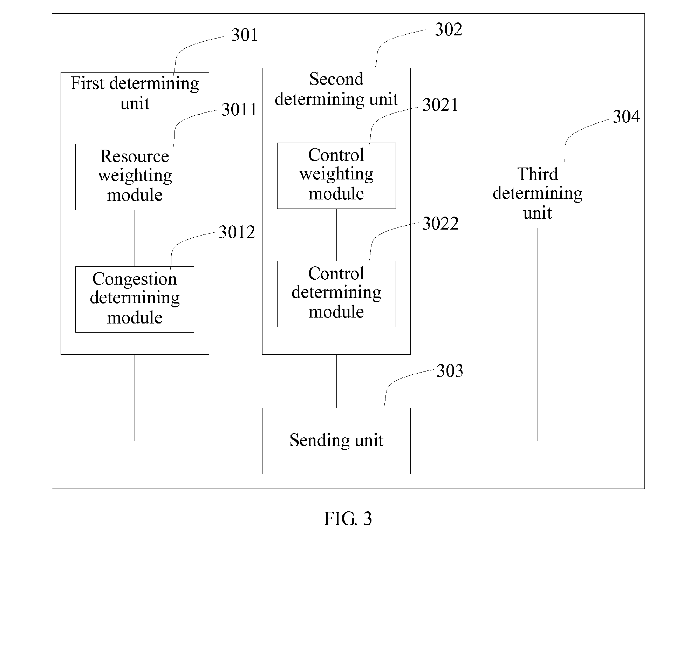

FIG. 3 is a structural diagram of a radio access network device according to another embodiment of the present invention. As shown in FIG. 3, the apparatus may be applicable to a radio access network device and includes:
A first determining unit 301 is configured to determine, according to use information of at least one kind of resource, whether a radio network providing a service for a user equipment is congested.

The resource may be a power resource, or, a channel processing unit (Channel Element, CE) resource, or, a code resource, or, an Iub transmission bandwidth resource, or, a signaling processing unit (Signalling Process Unit, SPU) resource, or, a forward access channel (Forward Access Channel, FACH) resource, or, a paging channel (Paging Channl, PCH) resource, or, a non-high speed packet access service R99 resource, or, a high speed packet access service (High Speed Packet Access, HSPA) resource, or, a circuit service (Circuit Service, CS) resource, or, a packet service (Packet Service, PS) resource, or the like, and the embodiment of the present invention is not limited thereto.

It should be noted that the use information of the resource may be a usage rate of the resource, or, a used quantity of the resource, or, an available quantity of the resource, or, an admission rejection probability of the resource, or, a congestion probability of the resource, or the like, and may also be a congestion level of the resource, or, a congestion state of the resource, or the like. The foregoing only provides examples for description, and the embodiment of the present invention is not limited thereto.

For example, when a usage rate of an Iub transmission bandwidth resource exceeds a preset usage rate threshold, the first determining unit 301 determines that the radio network providing a service for the user equipment is congested. For another example, when the user equipment requests a circuit service resource, an available quantity of a signaling processing unit SPU is lower than a preset SPU available quantity threshold and an available quantity of a circuit service CS resource is lower than a preset CS available quantity threshold, the first determining unit 301 determines that the radio network providing a service for the user equipment is congested.

The first determining unit 301 may further include a resource weighting module 3011 and a congestion determining module 3012.

The resource weighting module 3011 is configured to perform weighted averaging according to the use information of the at least one kind of resource and a weight of the resource to obtain comprehensive resource use information.

The congestion determining module 3012 is configured to determine, according to the comprehensive resource use information obtained by the resource weighting module 3011 and a congestion threshold, whether the radio network providing a service for the user equipment is congested.

The first determining unit 301 determines, according to the use information of the at least one kind of resource, whether the radio network providing a service for the user equipment is congested, which is described in the foregoing method embodiment and is not repeatedly described here.

It should be understood that, congestion in a radio network may be determined in multiple manners, which are not listed one by one here, and the embodiment of the present invention is not limited thereto.

The second determining unit 302 is configured to determine, according to at least one kind of call control information of the user equipment, whether the user equipment meets a condition of stopping data receiving and sending.

The call control information of the user equipment may be a connection state of the user equipment, where the connection state may be a cell dedicated channel CELL_DCH state, or, a cell forward access channel CELL_FACH state, or, a cell paging channel state CELL_PCH state, or, a UTRAN registration area paging channel state URA_PCH state, or the like; or,
a service connection phase of the user equipment, where the service connection phase may be an RRC setup phase, or, an RRC phase, or, a RAB setup phase, or, a RAB phase, or the like; or,
a handover state of the user equipment, where the handover state is a soft handover state, or, a non-soft handover state, or the like; or,
an allocation retention priority (Allocation and Retention Priority, ARP) of the user equipment; or,
a traffic handling priority (Traffic Handle Priority, THP) of the user equipment; or,
a user importance level of the user equipment, where the user importance level may be a gold user, or, a silver user, or a bronze user; or,
a traffic class (Traffic Class, TC) of the user equipment, where the traffic class is a streaming service, or, an interaction service, or, a background service, or, a session service; or,
data throughput of the user equipment; or,
at least one kind of link quality indicator, where the link quality indicator may be a common pilot channel (Common Pilot Channel, CPICH) ratio of energy per chip to the total noise power density (Ratio of energy per chip to the total Noise power density, Ec/N0) or, common pilot channel CPICH received signal code power (Received Signal Code Power, RSCP) or, pathloss Pathloss, or, a block error rate (Block Error Rate, BLER) or, a signal to interference ratio (Signal to Interference Ratio, SIR), or the like.

The second determining unit 302 may further include a control weighting module 3021 and a control determining module 3022.

The control weighting module 3021 is configured to perform weighted averaging according to the at least one kind of call control information of the user equipment and a weight of the call control information to obtain comprehensive call control information.

The control determining module 3022 is configured to determine, according to the comprehensive call control information obtained by the control weighting module 3021, that the user equipment meets the condition of stopping data receiving and sending.

For example, the control determining module 3022 may compare the comprehensive call control information and a preset threshold to determine that the user equipment meets the condition of stopping data receiving and sending.

For another example, the control determining module 3022 may sequence the comprehensive call control information of the user equipment and comprehensive call control information of at least one other user equipment, and determine, according to a sequence of the comprehensive call control information of the user equipment, that the user equipment meets the condition of stopping data receiving and sending.

The second determining unit 302 determines whether the user equipment meets the condition of stopping data receiving and sending, which is described in the foregoing method embodiment and is not repeatedly described here.

It should be understood that the second determining unit 302 may determine, in multiple manners, that the user equipment meets the condition of stopping data receiving and sending, which are not listed one by one here, and the embodiment of the present invention is not limited thereto.

A sending unit 303 is configured to send a first message when the first determining unit 301 determines that the radio network providing a service for the user equipment is congested and the second determining unit 302 determines that the user equipment meets the condition of stopping data receiving and sending, where the first message includes information for instructing the user equipment to stop at least one radio bearer.

The first message includes, but is not limited to, the following messages: radio bearer reconfiguration (RADIO BEARER RECONFIGURATION), cell update confirm (CELL UPDATE CONFIRM), radio bearer release (RADIO BEARER RELEASE), radio bearer setup (RADIO BEARER SETUP), and the like. The first message includes a plurality of parameters of a radio bearer for controlling the radio bearer, such as a radio bearer identifier, logic channel information mapped by the radio bearer, radio bearer stop/continue (RB Stop/Continue), and the like, so that the radio access network device can configure a parameter of each radio bearer of the user equipment according to a requirement, thereby achieving an objective of controlling a radio bearer.

It should be understood that the first message may also be other messages on a user plane or control plane, and includes, but is not limited to, a radio bearer control information element newly added in an existing message or a newly added message including radio bearer control information, and the embodiment of the present invention is not limited thereto.

The information included in the first message and a scenario of sending are described in the foregoing method embodiment and are not repeatedly described here.

That the first message includes the information for instructing the user equipment to stop at least one radio bearer may, for example, include that the radio bearer stop/continue attribute of the at least one radio bearer is stop, so as to stop the radio bearer. The first message may also include other attributes to indicate at least one radio bearer stop, and the embodiment of the present invention is not limited thereto.

Through the embodiment of the present invention, a user equipment can obtain a radio resource, and can also keep that no uplink data sending and no downlink data receiving are performed, thereby reducing consumption in the radio network.

Preferably, to enable a user equipment to stop sending service data, and at the same time, to receive signaling sent by a radio access network device and send signaling to the radio access network device, a TRB of the user equipment is stopped first.

Through the apparatus of the embodiment of the present invention, when a communication resource of a radio network is congested, a radio bearer of a user equipment is stopped to prevent the user equipment from uplink data sending and downlink data receiving, so that, in one aspect, the user equipment can acquire a radio resource, and particularly a resource request is not directly rejected, thereby avoiding retaliatory retries of the user equipment, and in another aspect, consumption of communication resources of a radio network is also reduced.

Furthermore, the apparatus in another embodiment of the present invention may further include the following optional units:
A third determining unit 304 is configured to determine whether the at least one radio bearer of the user equipment has been stopped.

The sending unit 303 is further configured to send the first message if the first determining unit 301 determines that the radio network providing a service for the user equipment is not congested and the third determining unit 304 determines that the at least one radio bearer of the user equipment has been stopped, where the first message includes information for instructing the user equipment to restore the at least one radio bearer.

That the first message includes information for instructing the user equipment to restore the at least one radio bearer may, for example, include that the radio bearer stop/continue attribute of the at least one radio bearer is continue, so as to restore the radio bearer, and the first message may also include other attributes to enable the at least one radio bearer to be continued, and the embodiment of the present invention is not limited thereto, so that the user equipment can restore data receiving and sending.

Through the apparatus in the embodiment of the present invention, it is implemented that when a radio network is not congested, a radio bearer which has been stopped and is of a user equipment is restored as soon as possible, so as to enable a user to restore sending and receiving of service data as soon as possible.

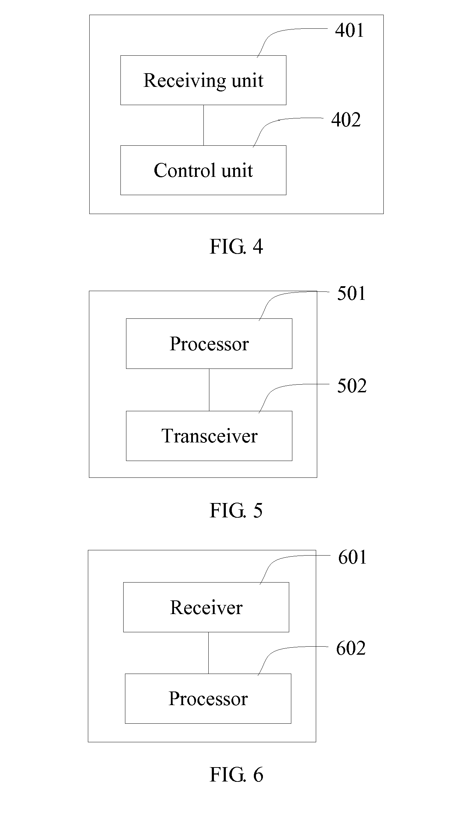

FIG. 4 is a structural diagram of a user equipment according to another embodiment of the present invention. As shown in FIG. 4, the apparatus may include:
A receiving unit 401 is configured to receive a first message, where the first message is sent by a radio access network device when it is determined that a radio network providing a service for the user equipment is congested and it is determined that the user equipment meets a condition of stopping data receiving and sending according to the method in the embodiment of FIG. 1, and includes information for instructing the user equipment to stop at least one radio bearer.
A control unit 402 is configured to stop the at least one radio bearer according to the information which is for instructing the user equipment to stop at least one radio bearer and is in the first message received by the receiving unit 401.

The first message is described in the foregoing method embodiment and is not repeatedly described here.

Furthermore:
A first message received by the receiving unit 401 is sent by the radio access network device when it is determined that the radio network providing a service for the user equipment is not congested and it is determined that the at least one radio bearer of the user equipment has been stopped according to the method in the embodiment of FIG. 1, and includes information for instructing the user equipment to restore the at least one radio bearer.

The control unit 402 is further configured to restore the at least one radio bearer according to the information which is for instructing the user equipment to restore the at least one radio bearer and is in the first message received by the receiving unit 401.

Through the apparatus in the embodiment of the present invention, it is implemented that when a radio network is congested, a user equipment stops uplink data sending and downlink data receiving, so as to reduce resource consumption in the radio network. When the radio network is not congested, a radio bearer that has been stopped is restored as soon as possible, so as to enable a user to restore sending and receiving of service data as soon as possible.

FIG. 5 is a structural diagram of a radio access network device according to another embodiment of the present invention. As shown in the figure, the apparatus may include a processor 501 and a transceiver 502.

The processor 501 is configured to, when it is determined that a radio network providing a service for a user equipment is congested according to use information of at least one kind of resource, determine, according to at least one kind of call control information of the user equipment, whether the user equipment meets a condition of stopping data receiving and sending; and if it is determined that the radio network providing a service for the user equipment is congested and it is determined that the user equipment meets the condition of stopping data receiving and sending, require the transceiver 502 to send a first message to the user equipment, where the first message includes information for instructing the user equipment to stop at least one radio bearer.

The transceiver 502 is configured to send the first message to the user equipment according to the requirement of the processor 501.

In another embodiment of the present invention, the processor 501 may be further specifically configured to determine whether the at least one radio bearer of the user equipment has been stopped; and if it is determined that the radio network providing a service for the user equipment is not congested and it is determined that the at least one radio bearer of the user equipment has been stopped, require the transceiver 502 to send a first message to the user equipment, where the first message includes radio bearer information for instructing the user equipment to restore the at least one radio bearer.

Components of the radio access network device in the embodiment of the present invention may be configured to implement functions of steps in the radio bearer control method in the foregoing relevant method embodiment. The steps are described in the foregoing method embodiment and are not repeatedly described here.

FIG. 6 is a structural diagram of a user equipment according to another embodiment of the present invention. As shown in the figure, the apparatus may include a receiver 601 and a processor 602.

The receiver 601 is configured to receive a first message, where the first message is sent by a radio access network device when it is determined that a radio network providing a service for the user equipment is congested and it is determined that the user equipment meets a condition of stopping data receiving and sending according to the method in the embodiment of FIG. 1, and includes information for instructing the user equipment to stop at least one radio bearer.

The processor 602 is configured to stop the at least one radio bearer according to the information which is for instructing the user equipment to stop at least one radio bearer and is included in the first message received by the receiver 601.

Furthermore:
A first message received by the receiver 601 may also be sent by the radio access network device when it is determined that the radio network providing a service for the user equipment is not congested and it is determined that the at least one radio bearer of the user equipment has been stopped according to the method in the embodiment of FIG. 1, and includes information for instructing the user equipment to restore the at least one radio bearer.

The processor 602 is configured to restore the at least one radio bearer according to the information which is for instructing the user equipment to restore the at least one radio bearer and is included in the first message received by the receiver 601.

Through the apparatus in the embodiment of the present invention, it is implemented that when a radio network is congested, a user equipment stops uplink data sending and downlink data receiving, so as to reduce resource consumption in the radio network. When a resource in the radio network is not congested, a radio bearer that has been stopped is restored as soon as possible, so as to enable a user to restore sending and receiving of service data as soon as possible.

Through the description of the foregoing embodiments, a person skilled in the art may be clearly aware that the present invention may be implemented through hardware, or firmware, or a combination of hardware and firmware. When the present invention is implemented through software, the foregoing functions may be stored in a computer readable medium, or transmitted as one or more commands or codes on a computer readable medium. The computer readable medium includes a computer storage medium and a communications medium. The communications medium includes any medium that facilitates transmission of a computer program from one place to another place. The storage medium may be any usable medium accessible to a computer. The following is taken as an example but is not limited: The computer readable medium may include a RAM, a ROM, an EEPROM, a CD-ROM or other optical disk storage and disk storage media or other disk storage devices, or any other medium that can be used to carry or store an expected program code in a command or data structure form and can be accessed by a computer. In addition, any connection may appropriately become a computer readable medium. For example, if the software implements transmission from a website, a server, or other remote sources by using a coaxial cable, an optical cable, a twisted pair, a digital subscriber line (DSL), or a wireless technology such as infrared, radio, or microwave, the coaxial cable, the optical cable, the twisted pair, the DSL, or the wireless technology such as infrared, radio, or microwave is included in fixation of the medium. For example, a disk (Disk) and a disc (disc) used in the present invention include a compressed compact disc (CD), a laser disc, an optical disc, a digital versatile disc (DVD), a floppy disk, and a blue-ray disc. Usually a disk magnetically duplicates data, while a disc optically duplicates data by using a laser. A combination of the foregoing should also be included in the protection scope of a computer readable medium.

The foregoing only provides exemplary embodiments of the technical solutions of the present invention, instead of limiting the protection scope of the present invention. Any modification, equivalent replacement, or improvement made within the spirit and principle of the present invention shall fall within the protection scope of the present invention.

## Claims

1. A radio bearer control method, comprising:
determining, according to use information of at least one kind of resource, whether a radio network providing a service for a user equipment is congested;
determining, according to at least one kind of call control information of the user equipment, whether the user equipment meets a condition of stopping data receiving and sending; and
if it is determined that the radio network providing a service for the user equipment is congested and it is determined that the user equipment meets the condition of stopping data receiving and sending, sending a first message, wherein the first message comprises information for instructing the user equipment to stop at least one radio bearer.

2. The method according to claim 1, wherein the first message comprises:
radio bearer reconfiguration RADIO BEARER RECONFIGURATION; or,
cell update confirm CELL UPDATE CONFIRM; or,
radio bearer release RADIO BEARER RELEASE; or,
radio bearer setup RADIO BEARER SETUP.

3. The method according to claim 1 or 2, wherein the information for instructing the user equipment to stop at least one radio bearer indicates that a radio bearer stop/continue attribute of the at least one radio bearer is stop.

4. The method according to any one of claims 1 to 3, wherein the resource comprises: a power resource; or, a channel processing unit CE resource; or, a code resource; or, an Iub interface transmission bandwidth resource; or, a signaling processing unit SPU resource; or, a forward access channel FACH resource; or, a paging channel PCH resource; or, a non-high speed packet access service R99 resource; or, a high speed packet access service HSPA resource; or, a circuit service CS resource; or, a packet service PS resource; and
the use information of the resource comprises: a usage rate of the resource; or, a used quantity of the resource; or, an available quantity of the resource; or, an admission rejection probability of the resource; or, a congestion probability of the resource; or, a congestion level of the resource; or, a congestion state of the resource.

5. The method according to any one of claims 1 to 4, wherein the determining, according to use information of at least one kind of resource, whether a radio network is congested comprises:
performing weighted averaging according to the use information of the at least one kind of resource and a weight of the resource to obtain comprehensive resource use information; determining, according to the comprehensive resource use information and a congestion threshold, whether the radio network providing a service for the user equipment is congested.

6. The method according to any one of claims 1 to 5, wherein the call control information of the user equipment comprises:
a connection state of the user equipment, wherein the connection state comprises a cell dedicated channel CELL_DCH state, or, a cell forward access channel CELL_FACH state, or, a cell paging channel CELL_PCH state, or, a UTRAN registration area paging channel URA_PCH state; or,
a service connection phase of the user equipment, wherein the service connection phase comprises an RRC setup phase, or, an RRC phase, or, a RAB setup phase, or, a RAB phase; or,
a handover state of the user equipment, wherein the handover state comprises a soft handover state, or, a non-soft handover state; or,
an allocation retention priority ARP of the user equipment; or,
a traffic handling priority THP of the user equipment; or,
a user importance level of the user equipment, wherein the user importance level may be a gold user, or, a silver user, or a bronze user; or,
a traffic class TC of the user equipment, wherein the traffic class is a streaming service, or, an interaction service, or, a background service, or, a session service; or,
data throughput of the user equipment; or,
at least one kind of link quality indicator, wherein the link quality indicator comprises a common pilot channel CPICH ratio of energy per chip to the total noise power density Ec/N0, or, common pilot channel CPICH received signal code power RSCP, or, pathloss Pathloss, or, a block error rate BLER, or, a signal to interference ratio SIR.

7. The method according to any one of claims 1 to 6, wherein the determining, according to at least one kind of call control information of the user equipment, whether the user equipment meets a condition of stopping data receiving and sending comprises:
performing weighted averaging according to the at least one kind of call control information of the user equipment and a weight of the call control information of the user equipment to obtain comprehensive call control information; and
determining, according to the comprehensive call control information, whether the user equipment meets the condition of stopping data receiving and sending.

8. The method according to claim 7, wherein the determining, according to the comprehensive call control information, whether the user equipment meets the condition of stopping data receiving and sending comprises:
determining, according to a comparison result between the comprehensive call control information and a preset threshold, whether the user equipment meets the condition of stopping data receiving and sending.

9. The method according to claim 7, wherein the determining, according to the comprehensive call control information, whether the user equipment meets the condition of stopping data receiving and sending comprises:
sequencing the comprehensive call control information of the user equipment and comprehensive call control information of at least one other user equipment; and
determining, according to sequencing information of the comprehensive call control information of the user equipment, whether the user equipment meets the condition of stopping data receiving and sending.

10. The method according to any one of claims 1 to 9, further comprising:
determining whether the at least one radio bearer of the user equipment has been stopped; and
if it is determined that the radio network providing a service for the user equipment is not congested and it is determined that the at least one radio bearer of the user equipment has been stopped, sending the first message, wherein the first message comprises information for instructing the user equipment to restore the at least one radio bearer.

11. The method according to claim 10, wherein the information for instructing the user equipment to restore the at least one radio bearer indicates that the radio bearer stop/continue attribute of the at least one radio bearer is continue.

12. The method according to any one of claims 1 to 11, wherein the radio bearer is a traffic radio bearer TRB or a signaling radio bearer SRB.

13. A radio bearer control method, comprising:
receiving, by a user equipment, a first message, wherein the first message is sent by a radio access network device when it is determined that a radio network providing a service for the user equipment is congested and it is determined that the user equipment meets a condition of stopping data receiving and sending, and comprises information for instructing the user equipment to stop at least one radio bearer; and
stopping, by the user equipment, the at least one radio bearer according to the information which is for instructing the user equipment to stop at least one radio bearer and is in the first message.

14. The method according to claim 13, further comprising:
receiving, by the user equipment, the first message, wherein the first message is sent by the radio access network device when it is determined that the radio network providing a service for the user equipment is not congested and it is determined that the at least one radio bearer of the user equipment has been stopped, and comprises information for instructing the user equipment to restore the at least one radio bearer; and
restoring, by the user equipment, the at least one radio bearer according to the information which is for instructing the user equipment to restore the at least one radio bearer and is in the first message.

15. A radio access network device, comprising:
a first determining unit, configured to determine, according to use information of at least one kind of resource, whether a radio network providing a service for a user equipment is congested;
a second determining unit, configured to determine, according to at least one kind of call control information of the user equipment, whether the user equipment meets a condition of stopping data receiving and sending; and
a sending unit, configured to send a first message when the first determining unit determines that the radio network providing a service for the user equipment is congested and the second determining unit determines that the user equipment meets the condition of stopping data receiving and sending, wherein the first message comprises information for instructing the user equipment to stop at least one radio bearer.

16. The radio access network device according to claim 15, wherein the first message comprises:
radio bearer reconfiguration RADIO BEARER RECONFIGURATION; or,
cell update confirm CELL UPDATE CONFIRM; or,
radio bearer release RADIO BEARER RELEASE; or,
radio bearer setup RADIO BEARER SETUP.

17. The radio access network device according to claim 15 or 16, wherein the information for instructing the user equipment to stop at least one radio bearer indicates that a radio bearer stop/continue attribute of the at least one radio bearer is stop.

18. The radio access network device according to any one of claims 15 to 17, wherein the resource comprises: a power resource; or, a channel processing unit CE resource; or, a code resource; or, an Iub interface transmission bandwidth resource; or, a signaling processing unit SPU resource; or, a forward access channel FACH resource; or, a paging channel PCH resource; or, a non-high speed packet access service R99 resource; or, a high speed packet access service HSPA resource; or, a circuit service CS resource; or, a packet service PS resource; and
the use information of the resource comprises: a usage rate of the resource; or, a used quantity of the resource; or, an available quantity of the resource; or, an admission rejection probability of the resource; or, a congestion probability of the resource; or, a congestion level of the resource; or, a congestion state of the resource.

19. The radio access network device according to any one of claims 15 to 18, wherein the first determining unit comprises:
a resource weighting module, configured to perform weighted averaging according to the use information of the at least one kind of resource and a weight of the resource to obtain comprehensive resource use information; and
a congestion determining module, configured to determine, according to the comprehensive resource use information obtained by the resource weighting module and a congestion threshold, whether the radio network providing a service for the user equipment is congested.

20. The radio access network device according to any one of claims 15 to 19, wherein the call control information of the user equipment comprises:
a connection state of the user equipment, wherein the connection state comprises a cell dedicated channel CELL_DCH state, or, a cell forward access channel CELL_FACH state, or, a cell paging channel state CELL_PCH, or, a UTRAN registration area paging channel state URA_PCH state; or,
a service connection phase of the user equipment, wherein the service connection phase comprises an RRC setup phase, or, an RRC phase, or, a RAB setup phase, or, a RAB phase; or,
a handover state of the user equipment, wherein the handover state comprises a soft handover state, or, a non-soft handover state; or,
an allocation retention priority ARP of the user equipment; or,
a traffic handling priority THP of the user equipment; or,
a user importance level of the user equipment, wherein the user importance level may be a gold user, or, a silver user, or a bronze user; or,
a traffic class TC of the user equipment, wherein the traffic class is a streaming service, or, an interaction service, or, a background service, or, a session service; or,
data throughput of the user equipment; or,
at least one kind of link quality indicator, wherein the link quality indicator comprises a common pilot channel CPICH ratio of energy per chip to the total noise power density Ec/N0, or, common pilot channel CPICH received signal code power RSCP, or, pathloss Pathloss, or, a block error rate BLER, or, a signal to interference ratio SIR.

21. The radio access network device according to any one of claims 15 to 20, wherein the second determining unit comprises:
a control weighting module, configured to perform weighted averaging according to the at least one kind of call control information of the user equipment and a weight of the control rule to obtain comprehensive call control information; and
a control determining module, configured to determine, according to the comprehensive call control information obtained by the control weighting module, whether the user equipment meets the condition of stopping data receiving and sending.

22. The radio access network device according to claim 21, wherein the control determining module is specifically configured to:
determine, according to a comparison result between the comprehensive call control information and a preset threshold, whether the user equipment meets the condition of stopping data receiving and sending.

23. The radio access network device according to claim 21, wherein the control determining module is specifically configured to:
sequence the comprehensive call control information of the user equipment and comprehensive call control information of at least one other user equipment; and
determine, according to sequencing information of the comprehensive call control information of the user equipment, whether the user equipment meets the condition of stopping data receiving and sending.

24. The radio access network device according to any one of claims 15 to 23, wherein the radio access network device comprises:
a third determining unit, configured to determine whether the at least one radio bearer of the user equipment has been stopped; and
the sending unit is further configured to send the first message when the first determining unit determines that the radio network providing a service for the user equipment is not congested and the third determining unit determines that the at least one radio bearer of the user equipment has been stopped, wherein the first message comprises information for instructing the user equipment to restore the at least one radio bearer.

25. The method according to claim 23 or 24, wherein the information for instructing the user equipment to restore the at least one radio bearer indicates that the radio bearer stop/continue attribute of the at least one radio bearer is continue.

26. The radio access network device according to any one of claims 15 to 25, wherein the radio bearer is a traffic radio bearer TRB or a signaling radio bearer SRB.

27. A user equipment, comprising:
a receiving unit, configured to receive a first message, wherein the first message is sent by a radio access network device when it is determined that a radio network providing a service for the user equipment is congested and it is determined that the user equipment meets a condition of stopping data receiving and sending, and comprises information for instructing the user equipment to stop at least one radio bearer; and
a control unit, configured to stop the at least one radio bearer according to the information which is for instructing the user equipment to stop at least one radio bearer and is in the first message received by the receiving unit.

28. The user equipment according to claim 27, wherein the first message received by the receiving unit is sent by the radio access network device when it is determined that the radio network providing a service for the user equipment is not congested and it is determined that the at least one radio bearer of the user equipment has been stopped, and comprises information for instructing the user equipment to restore the at least one radio bearer; and
the control unit is further configured to configured to restore the at least one radio bearer according to the information which is for instructing the user equipment to restore the at least one radio bearer and is in the first message received by the receiving unit.

29. A computer program product, wherein the computer program product stores one or more groups of computer programs, and when being run, the computer programs are used to execute the method according to any one of claims 1 to 14.
